(19) **Europäisches Patentamt / European Patent Office / Office européen des brevets**

(11) **EP 2 631 870 A1**

(12) **EUROPEAN PATENT APPLICATION**

(43) Date of publication:
**28.08.2013 Bulletin 2013/35**

(51) Int Cl.:
***G06T 5/00*** *(2006.01)*

(21) Application number: **13155449.5**

(22) Date of filing: **15.02.2013**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.02.2012  EA 201200255**

</td><td>

(71) Applicant: **Zakrytoe Akcionernoe Obshchestvo "Impul's"**
**St.Petersburg 197343 (RU)**

(72) Inventor: **Mercur'ev, Sergey Vasil'evich**
**198259 Saint-Petersburg (RU)**

(74) Representative: **Anohins, Vladimirs et al**
**Agency Tria Robit**
**P.O. Box 22**
**1010 Riga (LV)**

</td></tr>
</table>

(54) **Method for digital X-ray image denoising**

(57)      The invention relates to the area of digital X-ray image processing, and can be used for solving problems connected with denoising digital X-ray frames obtained by using high-energy radiation including X-rays. More specifically the present invention is designed for image noise reduction in digital X-ray frame series.

The task of the invention is to develop a multifunctional method for digital X-ray frame series denoising, in particular, to reduce the level of residual noise and artifacts in the form of discontinuity directed along the local-oriented object edges in texture domains of an image; and to reduce the level of residual LF-noise; as well as to exclude excessive filtration (over-smoothing) of small details.

The method results in increasing digital X-ray image processing quality.

Fig. 1

**Description**

**Field of the invention**

The invention relates to the area of digital X-ray image processing, and can be used for solving problems connected with denoising of digital X-ray frames obtained by using high-energy radiation including X-rays. More specifically the present invention is designed for image noise reduction in digital X-ray frame series.

**Previous state of art**

At present time clinical practice includes different methods for digital X-ray frames series processing: sharpness enhancement, anatomical structures emphasis, automatic region of interest (ROI) detection etc. The most important methods for digital X-ray frames series quality improvement are considered image denoising methods. Image denoising improves visual perception and low-contrast details visibility, improves quality of other processing algorithm operations. Because of that in digital radiography it is urgent to consider the problem to develop a filtering method, with noise being able to save diagnostic information, to operate in real time at high values of resolution, frame rates and considerable level of signal intensity-dependent noise.

There are two problems which a researcher encounters when developing an algorithm for filtering of digital frames series. The first problem is connected with the evaluation of image noise the level of which essentially depends on signal intensity. The second problem refers to development of filtration method offering a certain balance between filter operation quality and filtering rate. Let us consider each of the problems in details.

Let us consider the problem of signal-dependent noise estimation. Noise spectral and amplitude distribution data are practically applied in each good digital image filtering method. A relatively large number of denoising methods apply noise variance value as a parameter. The publications of numerous authors demonstrate a model in which the noise of a digital image is considered a stationary random process with normal amplitude and spectral distribution of white noise. The problem of transient noise reduction is also under examination; namely, the noise with the variance value depending on signal intensity; and it has been shown that the more accurately noise variance value is the better denoising algorithm results. *[Bosco et. al., Noise Reduction for Cfa Image Sensors Exploiting Hvs Behavior, Sensors 9 (3), 1692-1713, 2009; Foi, Practical Denoising of Clipped or Overexposed Noisy Images, Proc. 16th European Signal Process. Conf., EUSIPCO, 2008].*

Let us consider digital X-ray image noise origin. A detector measures intensity of attenuated (i.e. of that having passed through an object being under examination) X-ray radiation. During exposure period each detector cell accumulates on the average $\overline{N}$ electrons by absorbing photons. The number of $N$ accumulated electrons can be modeled by Poisson - distributed random variable:

$$P\left(N = n\right) = \exp(-\overline{N})\frac{\overline{N}^{n}}{n!}, \quad n \geq 0 .$$

Random fluctuations of absorbed photons are called photon noise. In modern detectors photon noise is the main noise source. Additional noise sources include detector noise: readout nose, thermal noise, amplifier noise, quantization distortion, etc. Cumulative effect of the said noise sources is modeled by Gaussian distributed random variable [Bosco et. al., Noise Reduction for Cfa Image Sensors Exploiting Hvs Behavior, Sensors 9(3), 1692-1713, 2009; Foi et. al., Practical poissonian-gaussian noise modeling and fitting for single-image raw-data, Image Processing, IEEE Transactions, TIP-03364-2007-FINAL]. According to widely used model, in case of linear electronic circuits, the variance of photon noise and additional noise sources is linearly dependent on the true signal value [Bernd Jähne, Digital Image Processing, Springer 2005]

$$\sigma^{2}\left(u\left(p\right)\right) = a\,u(p) + b , \qquad (1)$$

where $u(p)$ is a signal intensity level in the pixel $p = (i,j)$ of an image, $\sigma^{2}(u(p))$ -noise variance value via signal intensity dependence.

Therefore, digital image noise is linearly dependent on signal intensity. A lot of publications are devoted to the problem of signal-dependent noise estimation. [Bosco et. al., Noise Reduction for Cfa Image Sensors Exploiting Hvs Behavior, Sensors 9(3), p.1692-1713, 2009;

Foi et. al., Practical poissonian-gaussian noise modeling and fitting for single-image raw-data, Image Processing, IEEE TRANSACTIONS, TIP-03364-2007-FINAL.

Förstner, Image Preprocessing for Feature Extraction in Digital Intensity, Color and Range images, In Springer Lecture Notes on Earth Sciences, 1998;

Hensel et. al., Robust and Fast Estimation of Signal-Dependent Noise in Medical X-Ray Image Sequences, Springer, Proceedings BVM 2006, Hamburg, Germany, March 19-21, p.46-50, 2006;

Liu et. al., Automatic estimation and removal of noise from a single image, IEEE Transactions on Pattern Analysis and Machine Intelligence, p. 1- 35, October, 2006;

Salmeri et. al., Signal-dependent Noise Characterization for Mammographic Images Denoising. 16th IMEKO TC4 Symposium (IMEKOTC4 '08), Florence" Italy, 2008;

VVaegli, Investigations into the Noise Characteristics of Digitized Aerial Images, In: Int. Arch. For Photogr. And Remote Sensing, Vol. 32-2, 1998]. So, in the work of [Hensel et. al., Robust and Fast Estimation of Signal-Dependent Noise in Medical X-Ray Image Sequences, Springer, 2006] is described a non-parametric method for frame-by-frame noise estimation of digital medical frames series , wherein a special accent is made on the algorithm operating in real time. A two-parametric approach to digital frames noise estimation is described in the paper [Foi et. al., Practical poissonian-gaussian noise modeling and fitting for single-image raw-data, Image Processing, IEEE Transactions on 17, 1737-1754, 2008]. The noise of an original digital image obtained from a detector and not passed through non-linear transformations such as gamma correction etc., is modeled by an additive to signal random variable:

$$u_n(p) = u(p) + \sigma^2(u(p))n(p), \qquad (2)$$

where $u_n(p)$ is a signal intensity level in the pixel of noisy image being under observation, $\sigma^2(u(p))$ is a dependence of noise variance on signal intensity of type (1), $n(p) \in N(0,1)$ is a normal random variable. It is suggested a method for creating model curves of noise variance that takes into account sensor's nonlinearities which cause under - and over-exposure, i.e. violation of the linear function on borders of the dynamic range.

The second problem is to provide a balance between filter operation quality and high operation rate. The requirement for modern X-ray diagnostic complexes to provide quick processing of high-resolution images enters into a conflict with a desire to provide high quality of filtering results. By now there are very diverse mathematical tools covering tasks of digital image denoising. In general two filtration methods can cover almost each denoising method:

■ Filtration within the transform domain;
■ Filtration within the original image domain.

The first group of filtration methods (filtration within the transform domain) provides transformation of a source image by the use of a certain transform. Then on the base of a certain rule follows processing of coefficients for instance, using an appropriate nonlinear operator. The objective of such processing is to reduce noise energy and, likely, to improve image sharpness. Inverse transformation of the image under reconstruction finishes this filtering process. This group involves a great number of methods based on Fourier and *wavelets* transformation: [Strang et. al., Wavelets and Filter Banks, Wellesley-Cambridge Press.; Vetterli et. al., Wavelets and Subband Coding, Prentice Hall, Englewood Cliffs, NJ, 1995], complex *wavelets* transformation [Kingsbury, The dual-tree complex wavelet transform: A new technique for shift invariance and directional filters, In Proc. 8th IEEE DSP Workshop, Utah, Aug. 9-12, 1998, paper no. 86; Selesnick, The double-density dual-tree discrete wavelet transform. IEEE Trans. Signal Processing, vol. 52, no. 5, pp. 1304-1314, May 2004], *curvelet-* transformation [Candes et. al., Curvelets, multiresolution representation, and scaling laws, In SPIE conference on Signal and Image Processing: Wavelet Applications in Signal and Image Processing VIII, San Diego, 2000], etc. Speed of operation and operation quality of the given class filters is defined by the transformation used and coefficient processing *technique.*

The second group of filtration methods (filtration within original image domain) also involves a numerous list of approaches such as: *Anisotropic Diffusion* [Weickert, Anisotropic Diffusion in Image Processing. Tuebner Stuttgart, 1998], *variation algorithms* [Rudin et. al., Nonlinear total variation based noise removal algorithms, Physica D, 60: 259-268, 1992], *bilateral filtering* [Tomasi et. al., Bilateral Filtering for Gray and Color Images, In Proc. 6th Int. Conf. Computer Vision, New Delhi, India, 1998, pp. 839-846], non-local means (NL-means) filter [Buades et. al., On image denoising methods, SIAM Multiscale Modeling and Simulation, 4(2):490-530, 2005], *kernel regression* [Takeda et. al., Kernel regression for image processing and reconstruction, IEEE Transactions on Image Processing, vol. 16, no. 2, pp. 349-366, February 2007], *optimal spatial adaptation filter* [Kervrann et. al., Optimal spatial adaptation for patch-based image denoising. IEEE Transactions on Image Processing, vol. 15, no. 10, October 2006], etc. As a rule, these techniques involve similarity search between pixels or groups of pixels (patches) in an image itself, maybe with taking into consideration geometrical data (such as local orientation of image structures), and application of any modification (averaging) algorithm of these pixels intensities, wherein the modification extent depends on the pixel (patches) similarity degree.

**Disclosure of the invention**

A digital X-ray image denoising technique containing two steps is offered in the claimed invention. The first step involves signal intensity-dependent estimation of noise. The second step involves denoising and some subsidiary steps such as a combined bilateral nonlocal filtering, pyramidal removal of residual LF-noise and over-smoothing correction.

The closest to the claimed method for digital medical X-ray images' noise estimation is a variant described in the paper [Hensel et. al., Robust and Fast Estimation of Signal-Dependent Noise in Medical X-Ray Image Sequences, Springer, 2006], in accordance to which the following stages to create signal-dependent estimation of noise on the base of original image are necessary:

■ to estimate a true signal by means of LF filtration of the original image and calculate the difference between original image and its estimation that results in noise image acquisition;
■ to remove by any way noise image pixel values corresponding to abrupt changes (edges, single "hot" pixels) in the original image;
■ to divide the intensity range of the true image estimation into intervals; to accumulate for each such interval the noise frame pixel values that correspond to pixels of the true image estimate;
■ to compute noise variance in every interval using accumulated in this interval noise image pixel values.

The present invention uses noise estimation principles mentioned in the above paper. The main differences are as follows: 1) pixel values of the noise frame, correlated with abrupt changes in original image, are excluded by means of morphological extraction of pixel values of the noise frame, corresponding to the edges in the original image, are excluded by means of morphological extraction of pixel values of the noise frame, corresponding to the edges in the original image; 2) it is executed a robust local linear approximation of interval estimations of noise variance that results in a tabular function, describing noise dependence on the signal intensity; 3) on the basis of the true image estimate and computed tabular function they calculate a noise map as an image being pixel-by-pixel estimation of original image noise variance.

The closest to the claimed method for digital medical X-ray image denoising is NL-means algorithm [Buades et. al., On image denoising methods, SIAM Multiscale Modeling and Simulation, 4(2):490-530, 2005]. NL- means algorithm offers good results when digital X-ray image denoising. Signal intensity estimate of the current pixel is executed by averaging over a domain:

$$\hat{u}(p) = \sum_{q \in S(p,t)} w(p,q) u(q) \Big/ \sum_{q \in S(p,t)} w(p,q) \, . \qquad (3)$$

where $S(p,t)$ means domain of radius $t$ with the center in the current *pixel p* (that is, domain of $2 \cdot t + 1 \times 2 \cdot t + 1$ pixel size); $w(p,q) = F(\|U(p,f) - U(q,f)\|_{2,a}, \sigma, k)$ is averaging weight, $F$ is decreasing function; $U(p,f)$, $U(q,f)$ are pixel patches of radius $f$ with the center in the pixels $p$ and $q$ respectively;

$$\|U(p,f) - U(q,f)\|_{2,a} = \sqrt{\sum_{h \in S(0,f)} G(h,a) \cdot \big( u(p+h) - u(q+h) \big)^2}$$ is Gaussian weighted $G(h,a) = \exp(-h.h^T/$

$a^2)$ Euclidean distance between pixel patches; $\sigma$ is a root-mean-square error of image noise; $k$ acts as a parameter that controls averaging level; $u(q)$ is pixel intensity of the original image pixel; $\hat{u}(p)$ - overall estimate of the current pixel.

In a standard case, for example in the paper [Buades et. al., Image Denoising by Non-Local Averaging, Proc. of IEEE Int. Conf. on Acoustics, Speech, and Signal Processing, vol. 2, pp. 25-28, Mar. 2005], weighting function is defined as follows $F\big(\|U(p,f) - U(q,f)\|_{2,a}, \sigma, k\big) = \exp\big(-\|U(p,f) - U(q,f)\|_{2,a}^2 \big/ k^2 \sigma^2\big);$

Noise is assumed to be additive of constant variance, that is, the model of a noisy image is described by the formula (2) where $\sigma^2(u(p)) = \sigma^2 = const$ for each pixel $p$. Quoted here basic scheme of NL-means caused a great flow of investigations, concerning different aspects of improvement, acceleration and practical application of NL-means [Bilcu et. al.,

Fast non-local means for image denoising, In Digital Photography III Proc. of SPIE IS&T, Russel A. Martin, Jeffrey M. DiCarlo, and Nitin Sampat, Eds., February 2007, vol. 6502*; Dauwe et. al., A Fast Non-Local Image Denoising Algorithm, In Proc. SPIE Electronic Imaging, vol. 6812, San Jose, USA, Jan 2008; Mahmoudi et. al., Fast image and video denoising via nonlocal means of similar neighborhoods, IEEE Signal Processing Letters, 12(12):839-842, 2005; Peter et. al., Robust estimation approach for nonlocal-means denoising based on structurally similar patches, Int. J. Open Problems Compt. Math., vol. 2, no. 2, June 2009; Wang et. al., Fast non-local algorithm for image denoising, In Proc. of IEEE International Conference on Image Processing (ICIP), 2006, pp. 1429-1432].*

NL-means filter is very difficult to compute. One of the possible ways to accelerate NL-means filter operation is described in the paper [Buades et. al., A review of image denoising algorithms, with a new one, Multiscale Modeling and Simulation (SIAM interdisciplinary journal), Vol. 4 (2), pp. 490-530, 2005], where authors propose to use vector NL-means.

In this algorithm variant the image $I(p)$ is divided into $M$ blocks $U(p_m,f)$, $m = 1,M$, $I(p) = \bigcap_{m=1}^{M} U(p_m, f)$, where $p_m$ is a central pixel of a dividing block.

Dividing blocks are taken with overlapping. Pixel intensity estimate of the current dividing block is performed by the formula

$$\hat{U}(p_m,f) = \sum_{q \in S(p_m,t)} w(p_m,q)U(q,f) \bigg/ \sum_{q \in S(p_m,t)} w(p_m,q) . \qquad (4)$$

where $w(p_m,q) = \exp\left(-\left\|U(p_m,f) - U(q,f)\right\|_2^2 \big/ k^2\sigma^2\right)$ acts as a block averaging weight;

$\left\|U(p_m,f) - U(q,f)\right\|_2^2 = \sum_{h \in S(0,f)} \left(u(p_m + h) - u(q + h)\right)^2$ acts as a quadratic Euclidean distance between the block of a current pixel and of a comparison pixel; $\hat{U}(p_m,f)$ is a final estimate of pixel intensities of the current dividing block. Final block estimates are combined with averaging of block overlappings wherein generating an output filtered image. Application of vector scheme allows essential filter acceleration but with a certain quality loss of the image processed.

Abovementioned basic filtration scheme (3),(4) has a lot of disadvantages:

■ high level of residual noise and characteristic artifacts in the form of discontinuity, directed along the local -oriented object edges in texture domains of an image;
■ presence of residual LF-noise;
■ excessive filtration (over-smoothing) of small details.

The aim of the claimed invention is a development of X-ray image denoising method of enlarged functionality, in particular, with a possibility to reduce the level of residual noise and of characteristic artifacts in the form of discontinuity, directed along the local -oriented object edges in texture domains of an image; with a possibility to reduce the level of residual LF-noise; as well as to exclude excessive filtration (over-smoothing) of small details.

The technical result - digital X-ray image processing quality improvement - in the claimed invention comprising an acquisition of : an original image; estimate of noise variance depended on signal intensity; combined bilateral non-local filtration, residual LF-noise reduction; over-smoothing correction, is ACHIEVED by that, at the stage of estimation of noise variance depended on signal intensity they perform morphological pixel values extraction of the noise image corresponding to the edges in the original image; obtain a tabular function describing the dependence of noise variance on signal intensity on the base of robust local linear approximation of the interval variance estimations; calculate a noise map as an image being pixel-by-pixel estimation of original image noise variance; at the stage of combined bilateral non-local filtration they perform an averaging by combining the weights of NL-means filter and bilateral filter; at the stage of residual LF-noise reduction they use a pyramidal scheme for LF-filtration by a bilateral filter; obtain a final image, wherein over-smoothing correction is performed by mixing the final image with the original one on the base of structural and pixel similarities of both filtered- and original images.

A possible version of embodiment of the claimed invention is that where at the stage of combined bilateral non-local filtration the averaging weights are calculated over the image smoothed by a linear LF filter.

A possible version of embodiment of the claimed invention is that where at the stage of combined bilateral non-local filtration it is used a combined weight function in the form of fixed weight parts of NL-means- and bilateral filters, wherein these filtration methods result in combining.

A possible version of embodiment of the claimed invention is that where at the stage of combined bilateral non-local filtration with separation of NL-means- and bilateral filters it is used a separable version of the bilateral filter.

**Detailed description of the invention**

The accompanying drawings 1- 5 illustrate the claimed technical solution, its possible embodiment and technical result achievement.

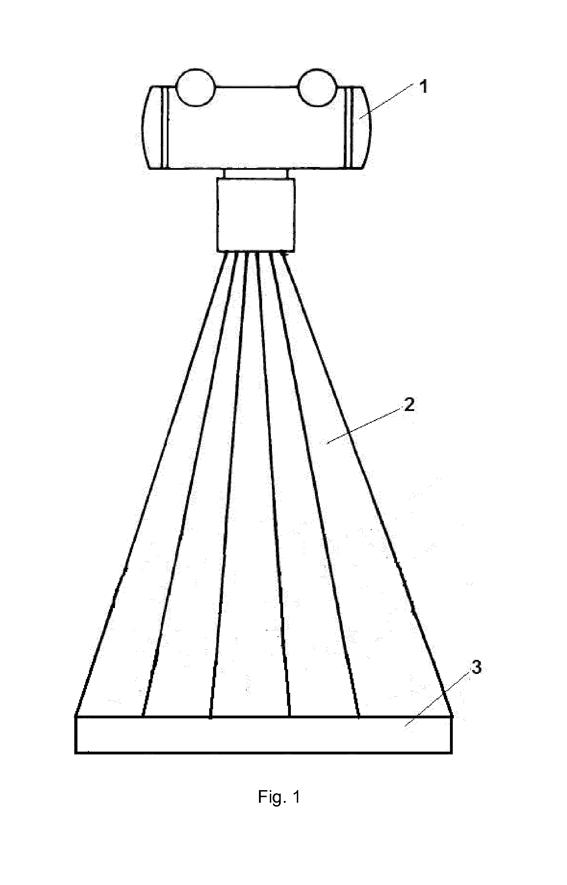

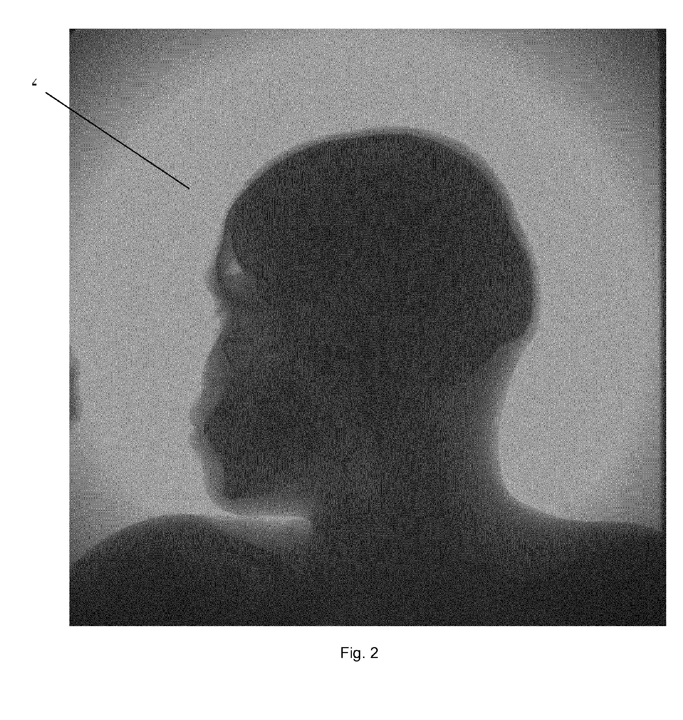

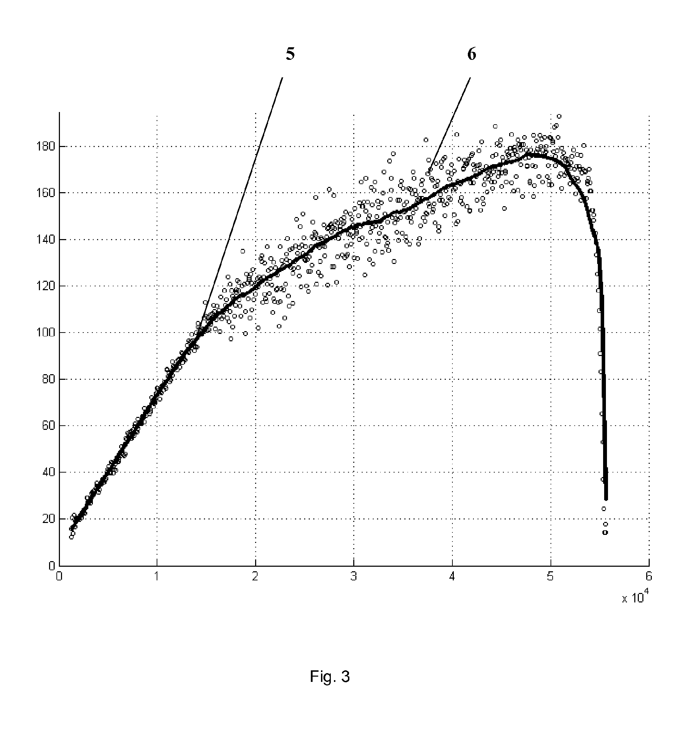

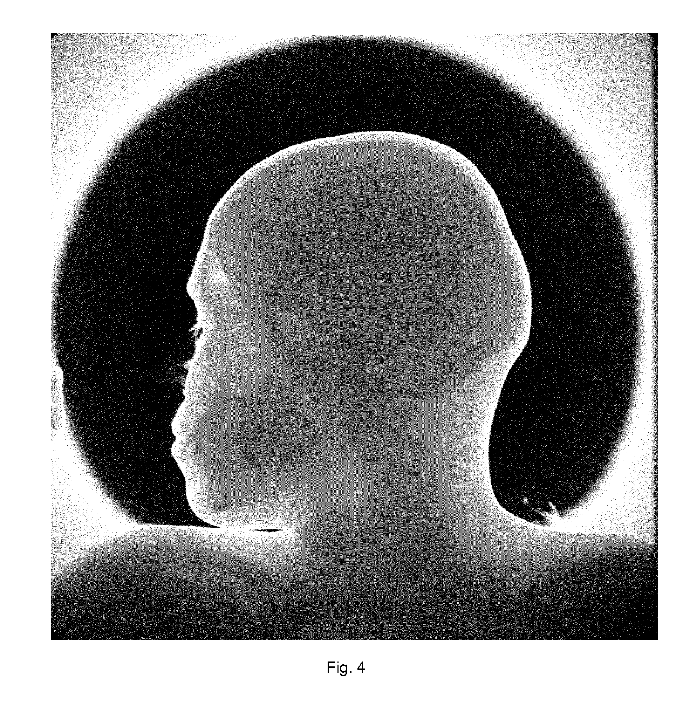

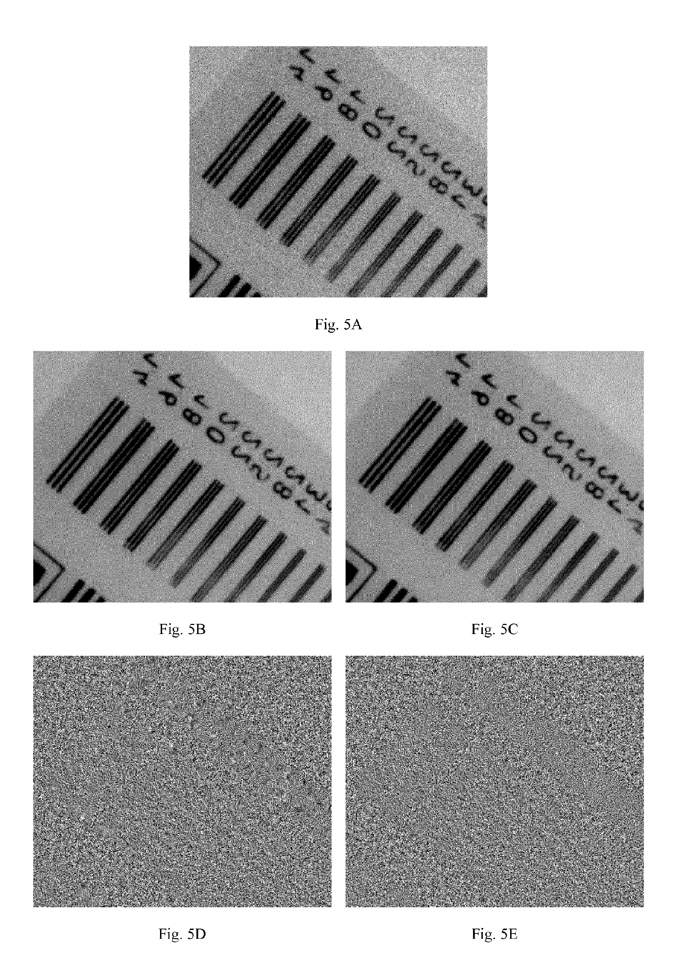

Fig. 1 shows a device for X-ray image acquisition. Fig. 2 shows an X-ray image of a head. Fig. 3 shows a tabular function (5 - solid line), describing the dependence of normal noise deviation on signal intensity for the image represented in Fig. 2. Fig. 4 shows normal noise deviation map for the image represented in Fig. 2. Fig. 5 (A, B, C, D, E) shows the effectiveness of the claimed method.

X-ray frame acquisition is implemented for instance by the device represented in Fig.1. It comprises an X-ray tube 1 that emits an X-ray beam 2. The X-ray beam 2 enters a detector 3. The detector 3 consists of a scintillation screen (not shown) and photosensitive array (not shown). The scintillation screen is optically coupled with the active surface of the photosensitive array. The X-ray beam 2 entered a detector 3, is converted by the scintillation screen into visible light that is converted into digital form by the sensors of the detector.

Suggested in the claimed invention filter reduces noise within several stages. Let us consider each of the said stages in details.

*Stage 1. Estimation of signal intensity-dependent noise variance.* At this stage original image estimation is implemented by means of LF linear filtration of the current image [Hensel et. al., Robust and Fast Estimation of Signal-Dependent Noise in Medical X-Ray Image Sequences, Springer, 2006]. In order to provide speed strict requirements it is reasonable to use the simplest linear filtration (e.g. binomial filter). On the base of the obtained smoothed image a noise image is generated - a difference between both original and filtered images.

Image estimation by simplest filters is non-ideal since edges turned out over-smoothed. Taking the difference between original and smoothed images results in a noise image comprising besides noise pixels in smooth regions a definite number of pixels corresponding to abrupt changes (e.g. anatomical structure edges - and non-noise pixels). These pixels can considerably distort variance value under estimation and shall be excluded from calculation. For that there are different technics [Foi et. al., Practical poissonian-gaussian noise modeling and fitting for single-image raw-data. Image Processing, IEEE Transactions on 17, 1737-1754 (October 2008*), Salmeri et. al., Signal-dependent Noise Characterization for Mammographic Images Denoising. IMEKO TC4 Symposium (IMEKOTC4 '08), Firenze, Italy, September 2008], which as a rule consist in thresholding smoothed derivatives of the original images wherein threshold value is determined by S/N local estimation. In image regions comprising a great number of details such estimation turns out unsatisfactory. Therefore, in the claimed invention when removing edges it is suggested an easier approach to select edges that does not require computing derivatives and local estimations of the standard deviation. The essence of this morphological approach of removing non-noise pixels consists in the following:

1. noise image is divided into two values - binary images of positive and negative changes;
2. to select edge corresponding regions obtained images are subjected to morphological erosion with subsequent dilatation;
3. processed images are combined into one binary image - an edge map of the original image.

In order to better save fine structures the erosion and dilatation implementation is based on 2x2 small masks (2x2 window).

When computing interval noise variance estimations minimal and maximal values of estimated image intensity (edges of intensity range) is determined, a subinterval (e.g. 32 grayscale degrees) is selected. Then, for each pixel of the estimated image is found an interval comprising given pixel value and, appropriate noise image pixel value is used to compute noise variance estimation in this interval (wherein edge pixels are excluded). For computation of interval estimation of noise variance can be used different formulas, e.g. a common unbiased estimate or robust estimation using median absolute deviation.

[Hensel et. al., Robust and Fast Estimation of Signal-Dependent Noise in Medical X-Ray Image Sequences, Springer, 2006*; Foi et. al., Practical poissonian-gaussian noise modeling and fitting for single-image raw-data,* Image Processing, IEEE Transactions on 17, 1737-1754, 2008]. This procedure results in a tabular function describing the dependence of noise variance on signal intensity.

Inaccuracy, occurring when building an edge map can cause rough errors during computation of interval variance estimation. Therefore, these estimations define more exactly using the technique iterative outlier removal [Hensel et.

al., Robust and Fast Estimation of Signal-Dependent Noise in Medical X-Ray Image Sequences, Springer, 2006]: for each interval iteratively are excluded noise pixel values exceeding threshold in magnitude, equal to three standard noise variances with subsequent recalculation of noise variance estimation in this interval.

After the interval noise variance estimations have been computed the estimation of the dependence of noise variance on intensity. At parametric approach the parameter estimation of noise model (1) can be built in a certain way (e.g. least-square method, likelihood function minimization, directional optimization). Sensor linearity can also be considered [Foi et. al., Practical poissonian-gaussian noise modeling and fitting for single-image raw-data, Image Processing, IEEE Transactions on 17, 1737-1754, 2008]. However as it mentioned in the paper [Hensel et. al., Robust and Fast Estimation of Signal-Dependent Noise in Medical X-Ray Image Sequences, Springer, 2006], building of a parametric model adequately describing the dependence of noise variance on signal intensity can involve difficulties because of some factors. These factors can involve sensor nonlinearity, nonlinear pre-processing of original images (e.g. the logarithm finding). That is why a more realizable and universal approach consisting in based on interval variance estimations a non-parametric estimation of the dependence of noise on intensity is built. In the claimed invention a non-parametric approach to the building of sought-for dependence is used wherein on the base of obtained interval estimations of noise variance an interpolating tabular function is created. The given tabular function is formed on the base of robust local linear approximation of the interval variance estimations. The use of robust methods provides additional reducing outliers' impact (rough errors in the interval variance estimations), while approximation locality provides repetition of the complex trend of a curve describing the dependence of noise on intensity.

So, obtained tabular function for each intensity value of the original image associates noise variance estimation. Tabular entry point can, for instance, serve intensity of the image under estimation. One of such a tabular function (solid line) 5, obtained for the image shown in Fig. 2, combined with interval estimates of mean square deviation of noise 6 (circles) can be seen in Fig. 3.

In practice in case of parametric noise estimation an approach can be used at which a conversion stabilizing noise variance of original image is applied [Starck et. al., Image Processing and Data Analysis: The Multiscale Approach. Cambridge University Press, 1998, Bernd Jähne, Digital Image Processing, Springer 2005]. Thus, the problem of signal-dependent noise filtration consists in the task of reduction of additive signal-non-dependent noise variance. In the claimed invention while implementing non-parametric noise estimation and building a noise map the following approach is proposed: based on the estimated image and interpolating table it is built a noise map that is an image each pixel of which estimates mean-square noise deviation in an appropriate original image pixel.

The noise map provides pixel-by-pixel noise estimation with sufficient accuracy for practical application. Fig. 4 shows an example of the noise map built for the image represented in Fig. 2

The example illustrates noise estimate algorithm operation at over-exposure (sensor saturation/ flare), a light hallo around the head (well seen in Fig.2, pos.4).

*Stage2. Combined filtration.* When using a standard scheme of filtration (3) with increasing pixel block size, filtration quality measured in peak values of S/N is improved. Besides quality improvement while using vector NL-means (4) with increasing pixel patch size filter's speed performance increases as well. However, at increasing pixel patch size in greatly textured domains and along sharp intensity changes (edges) there can be observed a sufficiently high level of residual noise and characteristic artifacts in the form of discontinuity directed along the local - oriented object edges. Presence of residual noise and characteristic artifacts in textured domains can be explained by decreased level of denoising caused by decreasing number of similar patches. High level of residual noise can be seen in smooth domains of the processed image. In the claimed invention a combined denoising method on the base of bilateral- and NL-means integration aimed at diminishing abovementioned limitations of the standard method has been developed. Let us call the method a combined filtering algorithm or combined filter. A combined non-local bilateral filtering is based on the following principle.

**The principle of combined non-local bilateral filtering.** At averaging the weight of every pixel is calculated using its closeness to the current pixel on the base of two matrics: bilateral (luminance) and non-local (structural). In case of NL-means filter if the current and comparison pixels are similar in the sense of non-local means filter that is, their blocks are structurally similar so the structural weight shall dominate. Otherwise if the patches are not similar to each other but similar to the intensity of the current and comparison pixels so influence of bilateral weight increases. To reduce residual noise the averaging weights are to be calculated over the smoothed image that can be obtained by means of filtration of original image by the simplest low-pass filter.

The standard filtration scheme (3) can be modified as follows:

$$\hat{u}(p) = \sum_{q \in S(p,t)} w(p,q)u(q) \Big/ \sum_{q \in S(p,t)} w(p,q) \, . \qquad (5)$$

where $w(p,q)=V(b(p,q),n(p,q))$ is a function that defines averaging weight of the combined filter and selected in a manner to satisfy combined filtering principle;

$b(p,q)=G(q-p,a)\cdot F((\overline{u}(p)-\overline{u}(q)), \sigma(\overline{u}(p)),k_b,h_b)$ is the bilateral filter weight, $G(s,a)=\exp(-s.s^T/a^2)$ is the Gaussian function; $n(p,q)=F(\|\overline{U}(p,f)-\overline{U}(q,f)\|_2,\sigma(\overline{u}(p)),k_n,h_n)$ is the NL-means filter weight; $\overline{u}(p)$, $\overline{U}(p,f)$ is the value of a pixel and of pixel block of the original image respectively; $\sigma(\overline{u}(p))$ is intensity-dependent root-mean-square error of the original image. To calculate pixel similarity on intensity and structure it is used the thresholding function with continuous transition $F(r,\sigma,k,h)=\exp(-\max(r^2-k.\sigma^2,0)/h^2)$, where $k$ and $h$ are parameters.

A vector version of the combined filtering can be formulated as:

$$\hat{U}(p_m,f)=\left(\sum_{q\in S(p_m,t)}W(p_m,q,f)\bullet U(q,f)\right)\bullet\Bigg/\sum_{q\in S(p_m,t)}W(p_m,q,f). \qquad (6)$$

Here $W(p_m,q,f)=V(B(p_m,q,f),n(p_m,q))$ determines the value block of the weight function of the combined filter; $B(p_m,q,f)$ is the value block of the weight function of the bilateral function, $B(p_m,q,f)=\{b(p_m+s,q+s),s\in S(0,f)\}$, each of which is calculated as $b(p_m+s,q+s)=G(s,a)\cdot F((\overline{u}(p_m+s)-\overline{u}(q+s)), \sigma(\overline{u}(p_m+s)),k_b,h_b)$, where $G(s,a)$ is the Gaussian function; $n(p_m,q)=F(\|\overline{U}(p_m,f)-\overline{U}(q,f)\|_2,\sigma(\overline{u}(p_m)),k_n,h_n)$ is the weight of NL-means filter being general for all comparison pixel block; $\sigma(\overline{u}(p_m))$, $\sigma(\overline{U}(p_m,f))$ - intensity-dependent root-mean-square error of the original image; • is single-item block multiplication/division; $\hat{U}(p_m,f)$ is a final pixel intensity estimate of the current dividing block.

In the given here combined filtering scheme (5).(6) the selection of weight function $V$, that can be determined by different ways plays an essential role. To develop speed-effective algorithm of combined filtering there is a possibility to generate a simple but successful in quality version of combined filter by formation of a weight function in the form of a given proportion of luminance and structural weights:

$$V(b,n)=(1-\lambda)\cdot b(p,q)+\lambda\cdot n(p,q); \qquad (7)$$

for vector version of the combined filter

$$V(B,n)=(1-\lambda)\cdot B(p_m,q,f)+\lambda\cdot n(p_m,q). \qquad (8)$$

$\lambda$ should be close to maximum possible NL-means filter weight value, e.g., $\lambda\approx 0.8$. The section of the weight function either (7) or (8) allows separating bilateral and non-local filters. When filter separating, combined filtering means consecutive performance of bilateral and non-local filtering with subsequent result combining. Filter separating allows selecting speed-effective filter parameters (e.g., reducing averaging domain of the bilateral filter), as well as extracting useless bilateral filtering of pixels which belong to overlapping areas of dividing blocks. Using the example of vector combined filter (6) and weight function in the form (8) the разделимый separated combined filtering can be expressed as follows:

$$\hat{U}(p_m,f)=\left(\lambda\cdot\hat{U}_n(p_m,f)+(1-\lambda)\cdot\hat{U}_b(p_m,f)\right)\bullet\Big/\left(\lambda\cdot c(p_m)+(1-\lambda)\cdot C(p_m,f)\right).(9)$$

Where $\hat{U}_n(p_m,f)=\sum_{q\in S(p_m,t)}w(p_m,q)U(q,f)$ a result of filtration of NL-means (without normalizing to summarized weight) by the vector filter; $\hat{U}_b(p_m,f)$ is the pixel block of an image filtered by a bilateral filter (without normalizing to summarized weight), that is, $\hat{U}_b(p_m,f)=\left\{\hat{u}(s),s\in S(p_m,f)\,|\,\hat{u}(s)=\sum_{q\in S(s,t)}b(s,q)u(q)\right\}$; $c(pm)$, $C(p_m,f)$ is

the summarized weight and the block of summarized weights of NL-means- and bilateral filters, respectively.

The divisible form of combined filtering (9), in case of application of separable bilateral filter, allows further increasing filtration speed essentially approaching it to the speed of vectorized version of the NL-means filter.

The effectiveness of the combined filtering method (6) with the weight (8) are shown in Fig. 5 (A, B, C, D, E), where: 5A shows a fragment of X-ray test pattern; 5B shows a fragment of X-ray test pattern processed by the vectorized version (4) of a standard NL-means filter; 5C shows a fragment of X-ray test pattern processed by the combined filter; 5D shows the difference between 5A and 5B; 5E shows the difference between 5A and 5C. The application of the combined filter results in denoising visible artifacts along edges of numerals that appear when using the standard NL-means filter.

*Stage 3. LF noise reduction.* The bilateral and NL-means filter in the smooth image domain of the same intensity with noise realization of the constant variance possesses features of the simplest linear neighbourhood - averaging filter (that is, acts as moving average). Due to application of a finite domain of averaging, a part of spectral noise components corresponding to LF will not be reduced and will be well visible in the smooth image domains.

In the claimed invention the reduction of residual LF noise is performed in the pyramid of images using bilateral filter with the linear regression [Burt et. al., The Laplacian pyramid as a compact image code, IEEE Trans. Commun., vol. COM-31, pp. 532-540, Apr. 1983*; Tomasi et. al., Bilateral Filtering for Gray and Color Images, In Proc. 6th Int. Conf. Computer Vision, New Delhi, India, 1998, pp. 839-846]. The pyramid of images is built in the following way:

$$\begin{cases} A_0(p) = I(p), \\ A_k(p) = \text{Reduce}(A_{k-1}(p)), \\ H_{k-1}(p) = A_{k-1}(p) - \text{Expand}(A_k(p)), k = \overline{1, n}. \end{cases} \qquad (10)$$

Where $I(p)$ is the original image; $A_k(p), H_k(p)$ is low-pass (approximating) and high frequency (detailed) image of $k$-level of the image pyramid; Reduce is the operator that filters and 2 times reduces the image sampling frequency (scaling), that is Reduce$(A)=(A*L_r)\downarrow2$, where $L_r$ - linear low-pass filter, $\downarrow2$ is scaling; Expand is the crowding sample- and image filtering operator, that is, Expand$(A)= (A\uparrow2)*L_e$, where $\uparrow2$ is a crowding sample, $L_e$ is a low-pass filter.

Noise variance distribution is estimated over low-pass pyramid components (10). For that purpose to the input of combined filter is added white Gaussian noise with the standard deviation σ. Due to the above mentioned similarity of the filter in the smooth image domain to the neighbourhood averaging filter we obtain low-pass noise root-mean-square error dependence on the pyramid level number:

$$\begin{cases} \sigma_0 = \sigma/(2 \cdot t + 1), \\ \sigma_k = \sigma_0 \cdot q(k, L_r), k = \overline{1, n}, \end{cases} \qquad (11)$$

where $\sigma_0$ is the root-mean-square error level of the image noise processed by the combined filter; $\sigma_k$ is the root-mean-square error level of the image noise $A_k(p)$ of the pyramid (10); $q(k,L_r)$ is the coefficient of root-mean-square error level decline in the images $A_k(p)$.

To reduce residual noise images $A_k(p)$ of the pyramid (10) are filtered by the bilateral filter. To reduce stairstepping artifacts [Buades et. al., The staircasing effect in neighborhood filters and its solution, IEEE Transactions on Image Processing, Vol. 15 (6), pp. 1499-1505, 2006] bilateral filter with linear regression is used:

$$\hat{a}_k(i, j) = a \cdot i + b \cdot j + c. \qquad (12)$$

The parameters $(a,b,c)$ are chosen considering function minimization $\min_{a,b,c}\left(\sum_{(x,y)\in S(i,j,t)} w(x, y)(a_k(x, y) - a \cdot i - b \cdot j - c)^2\right)$; $S(i,j,t)$ means an area of the radius $t$ with the center in the current pixel $a_k(i,j)$ of the image $k$ of the pyramid (10); $w(x,y)= G(x-i,y-j,a)\cdot F((a_k(i,j)-a_k(x,y)),\sigma_k(i,j))$ is averaging weight, wherein pixel neighbourhood is described by the Gaussian function $G(x-i,y-j,a)=\exp(-((x-i)^2+(y-j)^2)/a^2)$, pixel intensity neighbourhood is estimated by the function

$$F\big(\big(a_k(i,j)-a_k(x,y)\big),\sigma_k(i,j)\big)=\exp\!\Big(-\big(a_k(i,j)-a_k(x,y)\big)^2\big/\sigma_k^2(i,j)\Big);\ \sigma_k(i,j)$$ that depends on noise root-mean-square error intensity of the pyramid approximating image determined by the noise map and the following relationship (11); $\hat{a}_k(i,j)$ is an overall estimate of the current pixel intensity. Separable filter (12) is used to accelerate filtration.

Filtered approximating pyramid components are used to reconstruct the image with a reduced level of residual LF noise

$$\hat{A}_{k-1}(p)=\hat{H}_{k-1}(p)+\mathrm{Expand}\big(\hat{A}_k(p)\big), k=\overline{n,1}. \tag{13}$$

here, $\hat{A}$, $\hat{H}$ mean that the pyramid (10) is built by the use of low-pass image filtering by the filter (12).

*Stage 4. Over-smoothing correction.* In the claimed invention redundant *smoothing* of useful HF - information undergoes correction by means of mixing both the filtered image and its original version. Mixing weights are computed over pixel- and structural similarity of the filtered image and its original version. To compute structural similarity the Euclidean distance between the image pixel patches is computed; to compute pixel similarity (that is, intensity similarity) a distance between pixel intensities of the appropriate images is calculated.

Let $\hat{u}(p)$, $u(p)$ mean intensity values of the filtered- and original images in the pixel $p$, correspondingly. Then, frames' pixel similarity is determined using the following threshold function:

$$w_i(p)=\exp\!\Big(-\max\big(\big(\hat{u}(p)-u(p)\big)^2-k_i\cdot\sigma^2(u(p)),0\big)\big/h_i^2\Big), \tag{14}$$

where $k_i$, $h_i$ are parameters that determine a typical shape of the function ; $\sigma^2(u(p))$ is the noise variance value in the pixel $p$. Wherein structural similarity of the filtered image against its original version is calculated as follows

$$w_s(p)=\exp\!\left(-\max\!\left(\big\|\hat{U}(p)-U(p)\big\|_2^2-k_s\cdot\sigma^2(u(p)),0\right)\Big/h_s^2\right), \tag{15}$$

where $k_s$, $T_s$ are the parameters that determine a threshold function shape; $\big\|\hat{U}(p)-U(p)\big\|_2^2$ is a squared Euclidean distance between the pixel patches of the appropriate images.

To compute a final pixel - and structural measure of image similarity computed pixel - and structural similarities are combined in the form:

$$w(p)=w_i(p)\cdot w_i(p)+\big(1-w_i(p)\big)\cdot w_s(p). \tag{16}$$

Then the over-smoothing correction involves a union of the filtered image with the original noised one in accordance with the following rule:

$$\hat{u}_c(p)=w(p)\cdot\hat{u}(p)+\big(1-w(p)\big)\cdot u(p). \tag{17}$$

Definition of a similarity measure like (16) with correction (17) allows filtering out single sharp changes in the image (so-called bursts).

**Preferred embodiment of the invention**

To estimate image noise variance at first we obtain evaluation image and noise image. For that the original image $I(x,y)$ is filtered by the low-pass linear binomial filter of the size 3x3 $H_1$ = [1, 2,1]/4, $H = H_1^T \cdot H$ . ' Wherein we obtain a smoothed image $I_e(p)=I*H,$ where * means a convolution. Then we compute a noise image $N_e(p)=I(p)-I_e(p).$

When removing edges from variance computation on the base of noise image $N_e(p)$ we form images of positive and negative changes

$$N_e^-(p) = \begin{cases} 1, & N_e(p) < 0 \\ 0, & N_e(p) \geq 0 \end{cases}, \quad N_e^+(p) = \begin{cases} 1, & N_e(p) > 0 \\ 0, & N_e(p) \leq 0 \end{cases}.$$

To select large areas corresponding to the edges the given binary images are subjected to morphological erosion with subsequent dilatation by the use of masks 2x2:

$$B_e^-(p) = dilate_{[2x2]}\left(erode_{[2x2]}\left(N_e^-(p)\right)\right), \quad B_e^+(p) = dilate_{[2x2]}\left(erode_{[2x2]}\left(N_e^+(p)\right)\right).$$

Then these images are united to get a map of original image edges $E(p) = B_e^-(p) \cap B_e^+(p).$

To compute interval noise variance estimates we obtain a minimal $I_{min.}$ and maximal $I_{max}$ intensities of the image $I_e(p)$, select a pitch $h_M$ then intensity range is divided into intervals $M_i$ with a pitch $h_M$ (e.g., $h_M$ =32). For each image pixel $I_e(p)$ we find an interval which includes this pixel value and the appropriate pixel value of the image $N_e(p)$ is used to compute noise variance estimate $\sigma^2(i)$ in the given interval $M_i$, wherein we exclude those pixel values for which a value of the edge map is $E(p)$=1. When computing interval noise variance estimate the formula for unbiased estimate is used

$$\sigma^2(i) = \sum_{j=1}^{n_i}\left(N_e^i(j) - \overline{N}_e^i\right)^2 \bigg/ (n_i - 1),$$

where $N_e^i(j)$ is a pixel value in the noise image $N_e(p)$ from the interval $M_i$, $n_i$ is a total amount of accumulated pixel values within the interval $M_i$, $\overline{N}_e^i$ is a mean of noise pixel values within the interval $M_i$.

Obtained interval noise variance estimates $\sigma^2(i)$ are specified to iteratively exclude for every interval $M_i$ noise pixel values exceeding in-magnitude the threshold equal to three standard noise deviations with subsequent recalculation of noise variance estimate in the given interval:

$$N_e^i[k+1] = \left\{N_e(p) \mid \left(N_e(p) \in N_e^i[k]\right) \cap \left(N_e(p) \leq 3\sigma(i)\right)\right\},$$

where $N_e^i[k+1]$ is a set of noise pixel values in the interval $M_i$ at iteration $k$. In further calculations only those intervals are used where a sufficient amount of noise pixels (e.g., at least 500) is accumulated. Besides, those intervals are excluded from consideration in which the mean value $\overline{N}_e^i$ considerably differs from zero (deviation is more than one half of the step of grid of the interval $h_M$), since there is a high level of probability that in such intervals may prevail residual values of noiseless pixels.

An interpolating tabular function is created to estimate the dependence of noise variance on intensity on the base of obtained interval estimates of noise variance. This tabular function is created by using robust piecewise-linear approximation of noise variance interval estimation. For that on the grid of intervals $M_i$ the approximation step $h_I$ and radius $r_I$ are chosen (which can be made dependable on a number of points $n_i$ in intervals $M_i$). The following rule is used for approximation of values obtained during the previous step of the tabular function:

$$\hat{\sigma}^2(k \cdot h_I) = a \cdot m_k + b ,$$

where $k$ is a number of approximation knote; $m_k$ is the center of the interval $M_i(k \cdot h_I)$; parameters $a,b$ are calculated on the base of the minimum of deviations in magnitude [Press et. al., Numerical Recipes in C: The Art of Scientific Computing, Second Edition. New York: Cambridge University Press, 1999]

$$\sum_{j=kh_I-r_I}^{kh_I+r_I} \left| \hat{\sigma}^2(j) - a \cdot m_k - b \right| \to \min_{a,b} .$$

Such a process results in the table of values $\left\{ M_i(k \cdot h_I), \hat{\sigma}^2(k \cdot h_I) \right\}$ which undergo interpolation in the complete range of intensities $[I_{min}, I_{msc}]$, that is, we obtain an interpolating table of the sought-for dependence of noise variance on signal intensity.

A noise map is developed on the base of evaluative image and interpolating table wherein each pixel of the image evaluates noise variance in the appropriate pixel of the original image.

To provide good correlation between filtration quality and filter speed a combined bilateral non-local filtration is executed using the expression (9), wherein $\lambda = 0.85$, radius of averaging domain is $t = 5$, radius of a pixel block is to be chosen $f = 4$, blocks are chosen with one pixel overlapping. To calculate pixel similarity on intensity and structure it is used the thresholding function with continuous transition $F(r,\sigma,k,h) = \exp(-\max(r^2 - k \cdot \sigma^2, 0)/h^2)$, where $k$ and $h$ are parameters.

When similarity on intensity $k_b = 9$, while for structural similarity $k_n = 2.1$. The value of $h_b$ is selected in such a way to provide the given decay speed of the function $F$, for which purpose on the given level of the threshold $k\sigma^2$, e.g, $k\sigma^2 = 10 \cdot \sigma^2$, function value is selected as $F(r,\sigma,k,h)$, e.g, $F = 0.1$, which results in $h_b = 9$. Geometric distance is not considered when computing weight function. In the same way we find the value of $h_n$ for the weight function of the NL-means filter: at the level $k\sigma^2 = 3 \cdot \sigma^2$ we define $F = 0.5$ which results in $h_n = 1$. The evaluative image being used to compute averaging weights is computed by filtering the original image by means of low-pass linear binomial filter of the size $H_1$ = [1, 2,1]/4, $H = H_1^T \cdot H$ . The value $\sigma$ is defined from the noise map calculated at the stage of noise estimation.

At the stage of filtration of residual LF noise we use a pyramid of images (10) with the number of levels $n = 4$ , wherein as a low-pass filter in Reduce serves $L_r = [1,1]/2$, $L_r = L_r^T \cdot L_r$ . At such filter choice the level of noise root-mean-square error in the LF pyramid components decreases according to the law $q(k, L_r) = 2^{-k}$, $k = \overline{1,n}$. When creating HF pyramid components after the crowding sample in the operator Expand we use a low-pass filter of the type $L_e$ = [1,4,6,4,1]/16, $L_e = L_e^T \cdot L_e$ . At low-pass filtering we use a bilateral filter, where geometric distance is not considered, filter radius is to be 5. Weight function parameters agree with those of bilateral filter in the combined filter. When computing weight function geometric distance is not considered.

At over-smoothing correction to compute structural similarity we use blocks of radius 5. Parameters that define the shape of weight functions match with the parameters of combined filter weight functions. When computing weight functions of pixel similarity on intensity geometric distance is not considered.

*References*

1. Bilcu R.C., Vehvilainen M. Fast non-local means for image denoising. In Digital Photography III Proc. of SPIE IS&T, Russel A. Martin, Jeffrey M. DiCarlo, and Nitin Sampat, Eds., February 2007, vol. 6502.

2. Bosco A., Battiato S., Bruna A.R., Rizzo R. Noise Reduction for Cfa Image Sensors Exploiting Hvs Behavior. Sensors 9(3), 1692-1713, 2009.

3. Buades A., Coll B., Morel J.-M. A review of image denoising algorithms, with a new one. Multiscale Modeling and Simulation (SIAM interdisciplinary journal), Vol. 4 (2), pp. 490-530, 2005.

4. Buades A., Coll B., Morel J.-M. Image Denoising by Non-Local Averaging. Proc. of IEEE Int. Conf. on Acoustics, Speech, and Signal Processing, vol. 2, pp. 25-28, Mar. 2005.

5. Buades A., Coll B., Morel J.-M. On image denoising methods. SIAM Multiscale Modeling and Simulation, 4(2): 490-530, 2005.

6. Buades A., Coll B., Morel J.-M. The staircasing effect in neighborhood filters and its solution. IEEE Transactions on Image Processing, Vol. 15 (6), pp.1499-1505,2006.

7. Burt P., Adelson E. The Laplacian pyramid as a compact image code. IEEE Trans. Commun., vol. COM-31, pp. 532-540, Apr. 1983.

8. Candes E.J., Donoho D. Curvelets, multiresolution representation, and scaling laws. In SPIE conference on Signal and Image Processing: Wavelet Applications in Signal and Image Processing VIII, San Diego, 2000.

9. Dauwe A., Goossens B., Luong H., Philips W. A Fast Non-Local Image Denoising Algorithm. In Proc. SPIE Electronic Imaging, vol. 6812, San Jose, USA, Jan 2008.

10. Foi A., Trimeche M., Katkovnik V., Egiazarian K. Practical poissonian-gaussian noise modeling and fitting for single-image raw-data. Image Processing, IEEE Transactions on 17, 1737-1754 (October 2008).

11. Foi A. Practical Denoising of Clipped or Overexposed Noisy Images. Proc. 16th European Signal Process. Conf., EUSIPCO 2008, Lausanne, Switzerland, August 2008.

12. Forstner W. Image Preprocessing for Feature Extraction in Digital Intensity, Color and Range images. In Springer Lecture Notes on Earth Sciences, 1998.

13. **Gino M.** Noise, Noise, Noise. http://www.astrophys-assist.com/educate/noise/noise.htm

14. Hensel M., Lundt B., Pralow T., Grigat R.-R. Robust and Fast Estimation of Signal-Dependent Noise in Medical X-Ray Image Sequences. In Handels, H., et al., ed.: Bildverarbeitung fur die Medizin 2006: Algorithmen, Systeme, Anwendun-gen. Springer (2006) 46-50.

15. Kervrann C., Bourlanger J. Optimal spatial adaptation for patch-based image denoising. IEEE Transactions on Image Processing, vol. 15, no. 10, October 2006.

16. Kingsbury N.G. The dual-tree complex wavelet transform: A new technique for shift invariance and directional filters. In Proc. 8th IEEE DSP Workshop, Utah, Aug. 9-12, 1998, paper no. 86.

17. Liu C., Szeliski R., Kang S.B., Zitnick C.L., Freeman W.T. Automatic estimation and removal of noise from a single image. IEEE Transactions on Pattern Analysis and Machine Intelligence 30(2), 299-314, 2008.

18. Mahmoudi M., Sapiro G. Fast image and video denoising via nonlocal means of similar neighborhoods. IEEE Signal Processing Letters, 12(12):839-842, 2005.

19. Peter J., Govindan V.K., Mathew A.T. Robust estimation approach for nonlocal-means denoising based on structurally similar patches. Int. J. Open Problems Compt. Math., vol. 2, no. 2, June 2009.

20. Press W., Teukolsky S., Vetterling W., Flannery B. Numerical Recipes in C: The Art of Scientific Computing, Second Edition. New York: Cambridge University Press, 1992.

21. Rudin L., Osher S., Fatemi E. Nonlinear total variation based noise removal algorithms. Physica D, 60:259-268, 1992.

22. Salmeri M., Mencattini A., Rabottino G., Lojacono R. Signal-dependent Noise Characterization for Mammographic Images Denoising. IMEKO TC4 Symposium (IMEKOTC4 '08), Firenze, Italy, September 2008.

23. Selesnick I.W. The double-density dual-tree discrete wavelet transform. IEEE Trans. Signal Processing, vol. 52, no. 5, pp. 1304-1314, May 2004.

24. Starck J., Murtagh F., Bijaoui A. Image Processing and Data Analysis: The Multiscale Approach. Cambridge University Press, 1998.

25. Strang G., Nguyen T. Wavelets and Filter Banks. Wellesley-Cambridge Press.

26. Takeda H., Farsiu S., Milanfar P. Kernel regression for image processing and reconstruction. IEEE Transactions on Image Processing, vol. 16, no. 2, pp. 349-366, February 2007.

27. Tomasi C., Manduchi R. Bilateral Filtering for Gray and Color Images. In Proc. 6th Int. Conf. Computer Vision, New Delhi, India, 1998, pp. 839-846.

28. Vetterli M., Kovacevic J. Wavelets and Subband Coding. Prentice Hall, Englewood Cli□s, NJ, 1995.

29. Waegli B. Investigations into the Noise Characteristics of Digitized Aerial Images. In: Int. Arch. For Photogr. And Remote Sensing, Vol. 32-2, pages 341-348, 1998.

30. Wang J., Guo Y., Ying Y., Liu Y., Peng Q. Fast non-local algorithm for image denoising. In Proc. Of IEEE International Conference on Image Processing (ICIP), 2006, pp. 1429-1432.

31. Weickert J. Anisotropic Diffusion in Image Processing. Tuebner Stuttgart, 1998.

32. **Яне Б.** Цифровая обработка изображений. М., Техносфера, 2007, 583 с.

**Claims**

1. A method for noise reduction of digital X-ray frames comprising acquisition of original image, estimation of signal-dependent noise variance, combined bilateral noniocal filtration, reduction of residual LF noise, correction of over-smoothing **characterized in that**
the stage of estimation of signal-dependent noise variances involves morphological extraction of pixel values of the noise image corresponding to the edges in original image; acquisition of a tabular function describing noise dependence on the signal intensity by the use of a robust local linear approximation of interval estimations of noise variance; computation of a noise map as an image being pixel-by-pixel estimation of original image noise variance; the stage of combined bilateral nonlocal filtration involves an averaging by combining NL-means filter weights and bilateral filter; the stage of reduction of residual LF noise uses a pyramidal scheme with low-pass filtration by a bilateral filter; final image is obtained and over-smoothing correction is executed by combining both final and original images on the base of structural and pixel similarity of the filtered image to the original image.

2. The method of claim 1, wherein at the stage of combined bilateral nonlocal filtration the averaging weights are computed on the base of original image smoothed by linear low-pass filter.

3. The method of claim 1, wherein at the stage of combined bilateral nonlocal filtration a function of combined weight in the form of fixed shares of NL-means filter weights and bilateral one is used, wherein the given filtration types with their final integration.

4. The method of claim 1-2, wherein at the stage of combined bilateral nonlocal filtration with a separation of NL-means filters from the bilateral one a separable version of the bilateral filter is used.

Fig. 1

Fig. 2

Fig. 3

Fig. 4

Fig. 5A

Fig. 5B

Fig. 5C

Fig. 5D

Fig. 5E

Europäisches
Patentamt

European
Patent Office

Office européen
des brevets

# EUROPEAN SEARCH REPORT

Application Number

EP 13 15 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANTONI BUADES ET AL: "Nonlocal Image and Movie Denoising", INTERNATIONAL JOURNAL OF COMPUTER VISION, KLUWER ACADEMIC PUBLISHERS, BO, vol. 76, no. 2, 4 July 2007 (2007-07-04), pages 123-139, XP019581856, ISSN: 1573-1405 * the whole document * | 1-4 | INV. G06T5/00 |
| Y | BUADES A ET AL: "A review of image denoising algorithms, with a new one", MULTISCALE MODELING & SIMULATION, SOCIETY FOR INDUSTRIAL AND APPLIED MATHEMATICS, US, vol. 4, no. 2, 18 July 2005 (2005-07-18), pages 490-530, XP002496485, ISSN: 1540-3459, DOI: 10.1137/040616024 * the whole document * | 1-4 | |
| A | DORE V ET AL: "Robust NL-Means Filter With Optimal Pixel-Wise Smoothing Parameter for Statistical Image Denoising", IEEE TRANSACTIONS ON SIGNAL PROCESSING, IEEE SERVICE CENTER, NEW YORK, NY, US, vol. 57, no. 5, 1 May 2009 (2009-05-01), pages 1703-1716, XP011249631, ISSN: 1053-587X * the whole document * | 1-4 | TECHNICAL FIELDS SEARCHED (IPC) G06T |

-/--

The present search report has been drawn up for all claims

| Place of search | Date of completion of the search | Examiner |
|---|---|---|
| Munich | 29 May 2013 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 15 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MARC HENSEL ET AL: "Robust and Fast Estimation of Signal-Dependent Noise in Medical X-Ray Image Sequences", BILDVERARBEITUNG FÜR DIE MEDIZIN 2006, 21 March 2006 (2006-03-21), pages 46-50, XP055057832, Berlin Heidelberg DOI: 10.1007/3-540-32137-3_10 ISBN: 978-3-54-032137-8 * the whole document * ----- | 1-4 | |

TECHNICAL FIELDS
SEARCHED (IPC)

The present search report has been drawn up for all claims

| Place of search | Date of completion of the search | Examiner |
|---|---|---|
| Munich | 29 May 2013 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BOSCO.** Noise Reduction for Cfa Image Sensors Exploiting Hvs Behavior. *Sensors,* 2009, vol. 9 (3), 1692-1713
- **FOI.** Practical Denoising of Clipped or Overexposed Noisy Images. *Proc. 16th European Signal Process. Conf., EUSIPCO,* 2008
- **FOI.** Practical poissonian-gaussian noise modeling and fitting for single-image raw-data, Image Processing. *IEEE Transactions, TIP-03364-2007-FINAL*
- **BERND JÄHNE.** Digital Image Processing. Springer, 2005
- **FOI.** Practical poissonian-gaussian noise modeling and fitting for single-image raw-data, Image Processing. *IEEE TRANSACTIONS, TIP-03364-2007-FINAL,* 2007
- **FÖRSTNER.** Image Preprocessing for Feature Extraction in Digital Intensity, Color and Range images. *Springer Lecture Notes on Earth Sciences,* 1998
- Robust and Fast Estimation of Signal-Dependent Noise in Medical X-Ray Image Sequences. **HENSEL.** Proceedings BVM 2006, Hamburg, Germany. Springer, 19 March 2006, 46-50
- **LIU.** Automatic estimation and removal of noise from a single image. *IEEE Transactions on Pattern Analysis and Machine Intelligence,* October 2006, 1-35
- **SALMERI.** Signal-dependent Noise Characterization for Mammographic Images Denoising. *16th IMEKO TC4 Symposium (IMEKOTC4 '08), Florence'' Italy,* 2008
- **VVAEGLI.** Investigations into the Noise Characteristics of Digitized Aerial Images. *Int. Arch. For Photogr. And Remote Sensing,* 1998, vol. 32-2
- **HENSEL.** Robust and Fast Estimation of Signal-Dependent Noise in Medical X-Ray Image Sequences. Springer, 2006
- **FOI.** Practical poissonian-gaussian noise modeling and fitting for single-image raw-data. *Image Processing, IEEE Transactions,* 2008, vol. 17, 1737-1754
- **STRANG.** Wavelets and Filter Banks. Wellesley-Cambridge Press,
- **VETTERLI.** Wavelets and Subband Coding. Prentice Hall, Englewood Cliffs, 1995
- **KINGSBURY.** The dual-tree complex wavelet transform: A new technique for shift invariance and directional filters. *Proc. 8th IEEE DSP Workshop, Utah,* 09 August 1998
- **SELESNICK.** The double-density dual-tree discrete wavelet transform. *IEEE Trans. Signal Processing,* May 2004, vol. 52 (5), 1304-1314
- **CANDES.** Curvelets, multiresolution representation, and scaling laws,. *SPIE conference on Signal and Image Processing: Wavelet Applications in Signal and Image Processing VIII, San Diego,* 2000
- **WEICKERT.** *Anisotropic Diffusion in Image Processing. Tuebner Stuttgart,* 1998
- **RUDIN.** Nonlinear total variation based noise removal algorithms. *Physica D,* 1992, vol. 60, 259-268
- **TOMASI.** Bilateral Filtering for Gray and Color Images. *Proc. 6th Int. Conf. Computer Vision, New Delhi, India,* 1998, 839-846
- **BUADES.** *On image denoising methods, SIAM Multiscale Modeling and Simulation,* 2005, vol. 4 (2), 490-530
- **TAKEDA.** Kernel regression for image processing and reconstruction. *IEEE Transactions on Image Processing,* February 2007, vol. 16 (2), 349-366
- **KERVRANN.** Optimal spatial adaptation for patch-based image denoising. *IEEE Transactions on Image Processing,* October 2006, vol. 15 (10
- **BUADES.** On image denoising methods. *SIAM Multiscale Modeling and Simulation,* 2005, vol. 4 (2), 490-530
- **BUADES.** Image Denoising by Non-Local Averaging. *Proc. of IEEE Int. Conf. on Acoustics, Speech, and Signal Processing,* March 2005, vol. 2, 25-28
- Fast non-local means for image denoising. **BILCU.** Digital Photography III Proc. of SPIE IS&T. February 2007, vol. 6502
- **DAUWE.** A Fast Non-Local Image Denoising Algorithm. *Proc. SPIE Electronic Imaging,* January 2008, vol. 6812
- **MAHMOUDI.** Fast image and video denoising via nonlocal means of similar neighborhoods. *IEEE Signal Processing Letters,* 2005, vol. 12 (12), 839-842
- **PETER.** Robust estimation approach for nonlocal-means denoising based on structurally similar patches. *Int. J. Open Problems Compt. Math.,* June 2009, vol. 2 (2

- **WANG.** Fast non-local algorithm for image denoising. *Proc. of IEEE International Conference on Image Processing (ICIP),* 2006, 1429-1432
- **BUADES.** A review of image denoising algorithms, with a new one, Multiscale Modeling and Simulation. *SIAM interdisciplinary journal,* 2005, vol. 4 (2), 490-530
- **FOI.** Practical poissonian-gaussian noise modeling and fitting for single-image raw-data. *Image Processing, IEEE Transactions,* October 2008, vol. 17, 1737-1754
- **SALMERI.** Signal-dependent Noise Characterization for Mammographic Images Denoising. *IMEKO TC4 Symposium (IMEKOTC4 '08), Firenze, Italy,* September 2008
- *Image Processing, IEEE Transactions,* 2008, vol. 17, 1737-1754
- **FOI.** Practical poissonian-gaussian noise modeling and fitting for single-image raw-data, Image Processing. *IEEE Transactions,* 2008, vol. 17, 1737-1754
- **STARCK.** Image Processing and Data Analysis: The Multiscale Approach. Cambridge University Press, 1998
- **BURT.** The Laplacian pyramid as a compact image code. *IEEE Trans. Commun.,* April 1983, vol. COM-31, 532-540
- **BUADES.** The staircasing effect in neighborhood filters and its solution. *IEEE Transactions on Image Processing,* 2006, vol. 15 (6), 1499-1505
- **PRESS.** Numerical Recipes in C: The Art of Scientific Computing. Cambridge University Press, 1999
- Fast non-local means for image denoising. **BILCU R.C. ; VEHVILAINEN M.** Digital Photography III Proc. of SPIE IS&T. February 2007, vol. 6502
- **BOSCO A. ; BATTIATO S. ; BRUNA A.R. ; RIZZO R.** Noise Reduction for Cfa Image Sensors Exploiting Hvs Behavior. *Sensors,* 2009, vol. 9 (3), 1692-1713
- **BUADES A. ; COLL B. ; MOREL J.-M.** A review of image denoising algorithms, with a new one. *Multiscale Modeling and Simulation (SIAM interdisciplinary journal,* 2005, vol. 4 (2), 490-530
- **BUADES A. ; COLL B. ; MOREL J.-M.** Image Denoising by Non-Local Averaging. *Proc. of IEEE Int. Conf. on Acoustics, Speech, and Signal Processing,* March 2005, vol. 2, 25-28
- **BUADES A. ; COLL B. ; MOREL J.-M.** On image denoising methods. *SIAM Multiscale Modeling and Simulation,* 2005, vol. 4 (2), 490-530
- **BUADES A. ; COLL B. ; MOREL J.-M.** The staircasing effect in neighborhood filters and its solution. *IEEE Transactions on Image Processing,* 2006, vol. 15 (6), 1499-1505
- **BURT P. ; ADELSON E.** The Laplacian pyramid as a compact image code. *IEEE Trans. Commun.,* April 1983, vol. COM-31, 532-540

- **CANDES E.J. ; DONOHO D.** Curvelets, multiresolution representation, and scaling laws. *SPIE conference on Signal and Image Processing: Wavelet Applications in Signal and Image Processing VIII, San Diego,* 2000
- **DAUWE A. ; GOOSSENS B. ; LUONG H. ; PHILIPS W.** A Fast Non-Local Image Denoising Algorithm. *Proc. SPIE Electronic Imaging, vol. 6812, San Jose, USA,* January 2008, vol. 6812
- **FOI A. ; TRIMECHE M. ; KATKOVNIK V. ; EGIAZARIAN K.** Practical poissonian-gaussian noise modeling and fitting for single-image raw-data. *Image Processing, IEEE Transactions,* October 2008, vol. 17, 1737-1754
- **FOI A.** Practical Denoising of Clipped or Overexposed Noisy Images. *Proc. 16th European Signal Process. Conf., EUSIPCO 2008, Lausanne, Switzerland,* August 2008
- **FORSTNER W.** Image Preprocessing for Feature Extraction in Digital Intensity, Color and Range images. *Springer Lecture Notes on Earth Sciences,* 1998
- Robust and Fast Estimation of Signal-Dependent Noise in Medical X-Ray Image Sequences. **HENSEL M. ; LUNDT B. ; PRALOW T. ; GRIGAT R.-R. et al.** Bildverarbeitung fur die Medizin 2006: Algorithmen, Systeme, Anwendun-gen. Springer, 2006, 46-50
- **KERVRANN C. ; BOURLANGER J.** Optimal spatial adaptation for patch-based image denoising. *IEEE Transactions on Image Processing,* October 2006, vol. 15 (10
- **KINGSBURY N.G.** The dual-tree complex wavelet transform: A new technique for shift invariance and directional filters. *Proc. 8th IEEE DSP Workshop, Utah,* 09 August 1998
- **LIU C. ; SZELISKI R. ; KANG S.B. ; ZITNICK C.L. ; FREEMAN W.T.** Automatic estimation and removal of noise from a single image. *IEEE Transactions on Pattern Analysis and Machine Intelligence,* 2008, vol. 30 (2), 299-314
- **MAHMOUDI M. ; SAPIRO G.** Fast image and video denoising via nonlocal means of similar neighborhoods. *IEEE Signal Processing Letters,* 2005, vol. 12 (12), 839-842
- **PETER J. ; GOVINDAN V.K. ; MATHEW A.T.** Robust estimation approach for nonlocal-means denoising based on structurally similar patches. *Int. J. Open Problems Compt. Math.,* June 2009, vol. 2 (2
- Numerical Recipes. **PRESS W. ; TEUKOLSKY S. ; VETTERLING W. ; FLANNERY B.** C: The Art of Scientific Computing. Cambridge University Press, 1992
- **RUDIN L. ; OSHER S. ; FATEMI E.** Nonlinear total variation based noise removal algorithms. *Physica D,* 1992, vol. 60, 259-268

- **SALMERI M. ; MENCATTINI A. ; RABOTTINO G. ; LOJACONO R.** Signal-dependent Noise Characterization for Mammographic Images Denoising. *IMEKO TC4 Symposium (IMEKOTC4 '08), Firenze, Italy,* September 2008
- **SELESNICK I.W.** The double-density dual-tree discrete wavelet transform. *IEEE Trans. Signal Processing,* May 2004, vol. 52 (5), 1304-1314
- **STARCK J. ; MURTAGH F. ; BIJAOUI A.** Image Processing and Data Analysis: The Multiscale Approach. Cambridge University Press, 1998
- **STRANG G. ; NGUYEN T.** Wavelets and Filter Banks. Wellesley-Cambridge Press
- **TAKEDA H. ; FARSIU S. ; MILANFAR P.** Kernel regression for image processing and reconstruction. *IEEE Transactions on Image Processing,* February 2007, vol. 16 (2), 349-366

- **TOMASI C. ; MANDUCHI R.** Bilateral Filtering for Gray and Color Images. *Proc. 6th Int. Conf. Computer Vision, New Delhi, India,* 1998, 839-846
- **VETTERLI M. ; KOVACEVIC J.** Wavelets and Subband Coding. Prentice Hall, 1995
- **WAEGLI B.** Investigations into the Noise Characteristics of Digitized Aerial Images. *Int. Arch. For Photogr. And Remote Sensing,* 1998, vol. 32-2, 341-348
- **WANG J. ; GUO Y. ; YING Y. ; LIU Y. ; PENG Q.** Fast non-local algorithm for image denoising. *Proc. Of IEEE International Conference on Image Processing (ICIP,* 2006, 1429-1432
- **WEICKERT J.** *Anisotropic Diffusion in Image Processing. Tuebner Stuttgart,* 1998